# EUROPÄISCHE PATENTSCHRIFT

(11) **EP 3 369 624 B1**
(45) Veröffentlichungstag und Bekanntmachung des Hinweises auf die Patenterteilung: **23.06.2021**
(21) Anmeldenummer: 18159490.4
(22) Anmeldetag: 01.03.2018
(51) Int. Cl.: B60Q 5/00, B60Q 1/52, B60Q 1/46, B61L 15/00, B61L 15/02, B61L 23/00, B61D 29/00

(54) **WARNSYSTEM EINES FAHRZEUGS, VERFAHREN UND VERWENDUNG**
WARNING SYSTEM OF A VEHICLE, METHOD AND USE
SYSTÈME D'AVERTISSEMENT D'UN VÉHICULE, PROCÉDÉ ET UTILISATION

(30) Priorität: 02.03.2017 DE 102017104375
(43) Veröffentlichungstag der Anmeldung: 05.09.2018
(73) Patentinhaber: Bombardier Transportation GmbH, 10785 Berlin (DE)
(72) Erfinder: Siegemund, Thomas, 14167 Berlin (DE); Newesely, Gerald, 1090 Wien (AT)
(74) Vertreter: Cohausz & Florack

(56) Entgegenhaltungen:
- EP-A1- 2 944 516
- DE-A1-102007 046 309
- DE-U1- 20 302 083
- US-A- 4 213 115
- US-A- 4 227 174
- US-A- 5 389 913
- US-A1- 2002 190 847

## Beschreibung

Die vorliegende Erfindung betrifft ein Warnsystem eines Fahrzeugs. Die Erfindung betrifft weiterhin ein Verfahren, durchgeführt von einem Fahrzeug oder einem Teil hiervon, insbesondere einem erfindungsgemäßen Warnsystem. Zudem betrifft die Erfindung eine Verwendung eines erfindungsgemäßen Warnsystems.

Warnsysteme für Fahrzeuge sind aus dem Stand der Technik für unterschiedliche Situationen bekannt. Dabei gibt es zum einen Warnsysteme, welche beispielsweise den Führer des entsprechenden Fahrzeugs selbst vor Gefahrensituationen warnen. Häufig ist es aber notwendig, nicht nur den Führer, sondern stattdessen oder zusätzlich vor allem die Umwelt des Fahrzeugs, das heißt insbesondere andere Verkehrsteilnehmer im Außenbereich des Fahrzeugs, wie Führer anderer Fahrzeuge, Fußgänger oder Fahrradfahrer, zu warnen.

So schlägt beispielsweise die EP 1 236 615 A1 vor, bei Fahrzeugen, insbesondere bei Personenkraftwagen, ein optisches Signalisierungssystem vorzusehen, welches zur Signalisierung einer Bremsbetätigung der Bremsvorrichtung des entsprechenden Fahrzeugs dient. Hierdurch sollen Verkehrsteilnehmer auch gegen die Fahrtrichtung des Fahrzeugs erkennen, ob das Fahrzeug bremst und dementsprechend ihr Verhalten im Verkehr anpassen.

Die GB 2 382 404 A schlägt vor, die Bremsintensität mittels eines Sensors zu erfassen und eine Reihe von Beleuchtungen am hinteren Ende des Fahrzeugs proportional zur Bremsintensität zu erleuchten.

Um die Sicherheit beispielsweise an Haltestellen zu erhöhen, schlägt die US 5,467,071 vor, den Boden seitlich eines Busses konstant zu beleuchten und Audionachrichten abzuspielen, die von ein- oder aussteigenden Passagieren gehört werden.

Derartige Lösungen sind jedoch auf sehr spezielle Situationen beschränkt, wie etwa eine starke Bremsung oder das Ein- und Aussteigen von Passagieren an einer Haltestelle. In anderen Situationen ermöglicht dies jedoch in der Regel keine Steigerung der Sicherheit.

Ein zuverlässiges und schnelles Erzeugen von Aufmerksamkeit bei anderen Verkehrsteilnehmern, um diese zu warnen, ist insbesondere bei Schienenfahrzeugen notwendig, da diese nicht ausweichen können. Hierzu ist es bekannt, am Fahrzeug entsprechende Warnsysteme vorzusehen. Typischerweise weist ein Fahrzeug, wie beispielsweise eine Straßenbahn, eine akustische Warnanlage in Form einer Hupe oder Glocke auf, welche zur Erzeugung von Aufmerksamkeit im Außenbereich des Fahrzeugs und damit zur Warnung der Verkehrsteilnehmer gedacht ist.

Um dieses Warnsystem zu verbessern, schlägt beispielsweise die DE 44 39 468 B4 vor, anstelle der üblichen mechanischen Läutwerke wie Glocken einen Drucklautsprecher zur Erzeugung von Warnsignalen an der Außenseite von Straßenbahnen vorzusehen. Hiermit soll die Erzeugung von reproduzierbaren Warnsignalen sichergestellt werden.

Bei vielen Verkehrsteilnehmern und insbesondere bei Fußgängern ist die Verwendung von derartigen akustischen Signalen jedoch häufig unzureichend. Aufgrund der Benutzung von Mobiltelefonen und/oder Kopfhörern kann die visuelle und auditive Wahrnehmungsfähigkeit eines Verkehrsteilnehmers nämlich stark eingeschränkt sein.

Im Fall von Schienenfahrzeugen, wie Straßenbahnen, werden hierzu beispielsweise stationäre Warnanlagen an Bahnübergängen angebracht. Dies ist aber mit einem erheblichen Aufwand und Kosten verbunden. Zudem entfalten derartige stationäre Warnanlagen nur eine äußerst lokale Wirkung an dem entsprechenden Übergang,

Ein gattungsgemäßes Warnsystem ist aus der US 4 213 115 A bekannt.

Vor dem Hintergrund des Stands der Technik stellt sich der vorliegenden Erfindung die Aufgabe, ein Warnsystem eines Fahrzeugs, ein Verfahren und eine Verwendung vorzuschlagen, womit die Sicherheit der anderen Verkehrsteilnehmer weiter erhöht werden kann.

Gemäß einem ersten Aspekt der Erfindung wird die Aufgabe mit einem Warnsystem eines Fahrzeugs, insbesondere eines Schienenfahrzeugs, gelöst, umfassend: ein akustisches Signalisierungssystem zur Erzeugung von Aufmerksamkeit im Außenbereich des Fahrzeugs, und ein optisches Signalisierungssystem mit zumindest einer Lichtquelle im Frontbereich des Fahrzeugs zur Erzeugung von Aufmerksamkeit im Außenbereich des Fahrzeugs, wobei das optische Signalisierungssystem mittels eines Blinksignals eingerichtet ist, wobei das akustische Signalisierungssystem und das optische Signalisierungssystem derart gekoppelt sind, dass das optische Signalisierungssystem zur Erzeugung von Aufmerksamkeit im Außenbereich des Fahrzeugs aktiviert wird, wenn ein Aktivieren des akustischen Signalisierungssystems zur Erzeugung von Aufmerksamkeit im Außenbereich des Fahrzeugs erfolgt, und wobei das Warnsystem derart eingerichtet ist, dass sich eine Eigenschaft des Blinksignals in Abhängigkeit der Aktivierungsdauer des Blinksignals ändert.

Gemäß einem zweiten Aspekt der Erfindung wird die Aufgabe mit einem Verfahren, durchgeführt von einem Fahrzeug, insbesondere einem Schienenfahrzeugs, oder einem Teil hiervon, insbesondere einem Warnsystem gemäß dem ersten Aspekt, gelöst, das Verfahren umfassend: Aktivieren eines akustischen Signalisierungssystems des Fahrzeugs zur Erzeugung von Aufmerksamkeit im Außenbereich des Fahrzeugs; und Aktivieren eines optischen Signalisierungssystems mit zumindest einer Lichtquelle im Frontbereich des Fahrzeugs zur Erzeugung von Aufmerksamkeit im Außenbereich des Fahrzeugs mittels eines Blinksignals, wenn das Aktivieren des akustischen Signalisierungssystems des Fahrzeugs erfolgt, wobei das Warnsystem derart eingerichtet ist, dass sich eine Eigenschaft des Blinksignals in Abhängigkeit der Aktivierungsdauer des Blinksignals ändert.

Gemäß einem dritten Aspekt wird die Aufgabe durch die Verwendung eines Warnsystems gemäß dem ersten Aspekt in einem Schienenfahrzeug zur Erzeugung von Aufmerksamkeit im Außenbereich des Schienenfahrzeugs gelöst.

Das akustische Signalisierungssystem erzeugt etwa auf mechanische Art, beispielsweise mittels einer Klingel oder Glocke und/oder auf elektronische Art, beispielsweise mittels eines Lautsprechers, akustische Signale. Dabei kann ebenfalls ein auf mechanische Art erzeugtes Signal imitiert werden, wie etwa ein Klingeln oder Läuten. Das akustische Signalisierungssystem ist zur Erzeugung von Aufmerksamkeit im Außenbereich des Fahrzeugs vorgesehen. Daher ist das akustische Signalisierungssystem insbesondere in der Lage, akustische Signale zu erzeugen, von denen erwartet werden kann, dass diese im typischen Verkehr von den weiteren Verkehrsteilnehmern gehört werden. Das akustische Signalisierungssystem erzeugt also Aufmerksamkeit von Verkehrsteilnehmern im Außenbereich des Fahrzeugs, indem es die auditive Wahrnehmung der jeweiligen Verkehrsteilnehmer anspricht. Dies ist insbesondere vorteilhaft, sofern das Fahrzeug für den entsprechenden Verkehrsteilnehmer visuell nicht sichtbar ist.

Das optische Signalisierungssystem weist zumindest eine Lichtquelle im Frontbereich des Fahrzeugs auf, beispielsweise eine oder mehrere Glühlampen und/oder LEDs, um optische Signale im Frontbereich des Fahrzeugs zu erzeugen. Das optische Signalisierungssystem ist zur Erzeugung von Aufmerksamkeit im Außenbereich des Fahrzeugs vorgesehen. Daher ist das optische Signalisierungssystem insbesondere in der Lage, optische Signale zu erzeugen, von denen erwartet werden kann, dass diese im typischen Verkehr von den weiteren Verkehrsteilnehmern gesehen werden. Das optische Signalisierungssystem erzeugt also Aufmerksamkeit von Verkehrsteilnehmern im Außenbereich des Fahrzeugs, indem es die visuelle Wahrnehmung der jeweiligen Verkehrsteilnehmer anspricht. Dies ist insbesondere vorteilhaft, sofern das Fahrzeug für den entsprechenden Verkehrsteilnehmer nicht hörbar ist.

Dadurch, dass das optische Signalisierungssystem zur Erzeugung von Aufmerksamkeit im Außenbereich des Fahrzeugs aktiviert wird, kann das optische Signalisierungssystem insbesondere die zumindest eine Lichtquelle beispielsweise eingeschaltet werden. Ebenfalls ist jedoch denkbar, dass das optische Signalisierungssystem zuvor zu einem anderen Zweck (beispielsweise als Tagfahrlicht) bereits aktiviert ist, und dann jedoch zur Erzeugung von Aufmerksamkeit im Außenbereich des Fahrzeugs aktiviert wird.

Die zumindest eine Lichtquelle ist vorzugsweise in Fahrtrichtung gerichtet. Die eine oder mehreren Lichtquellen sind dabei vorzugsweise an der Frontseite des Fahrzeugs angeordnet, beispielsweise unterhalb, oberhalb und/oder seitlich der Windschutzscheibe. Die zumindest eine Lichtquelle umfasst beispielsweise zumindest eine Glühlampe, Halogenlampe, eine Xenon-Lampe und/oder eine LED-basierte Lichtquelle. Vorzugsweise umfasst das optische Signalisierungssystem mehrere Lichtquellen im Frontbereich des Fahrzeugs.

Dadurch, dass nun das akustische Signalisierungssystem und das optische Signalisierungssystem derart gekoppelt sind, dass das optische Signalisierungssystem zur Erzeugung von Aufmerksamkeit im Außenbereich des Fahrzeugs aktiviert wird, wenn ein Aktivieren des akustischen Signalisierungssystems zur Erzeugung von Aufmerksamkeit im Außenbereich des Fahrzeugs erfolgt, wird erreicht, dass die Aufmerksamkeit von Verkehrsteilnehmern besser erlangt werden kann, als wenn beispielsweise , wie bisher üblich, lediglich das akustische Signalisierungssystem aktiviert wird. Im Ergebnis kann die Sicherheit der weiteren Verkehrsteilnehmer erhöht werden. Durch das optische Signalisierungssystem können die Verkehrsteilnehmer leichter erkennen aus welcher Richtung das Fahrzeug und damit die Gefahrenquelle kommt. Dies ist insbesondere bei Schienenfahrzeugen vorteilhaft, da diese nicht ausweichen können und häufig auf die Aufmerksamkeit der weiteren Verkehrsteilnehmer angewiesen sind.

Dabei ist das Warnsystem insbesondere für Schienenfahrzeug vorteilhaft. Ein Schienenfahrzeug kann insbesondere eine Bahn sein, beispielsweise eine Eisenbahn, eine Fernverkehrsbahn oder eine Nahverkehrsbahn. Insbesondere für Nahverkehrsbahnen, wie eine Straßenbahn, Stadtbahn oder U-Bahn, welche sich durch innerstädtischen Verkehr bewegen, ist das Warnsystem vorteilhaft. Ein Schienenfahrzeug kann auch nur ein Teil einer Bahn, wie beispielsweise ein Triebfahrzeug oder ein Waggon, sein.

Der Führer des Fahrzeugs, so etwa der Führer eines Schienenfahrzeugs, wie etwa einer Straßenbahn, kann vorteilhaft wie gewohnt das akustische Signalisierungssystem aktivieren, beispielsweise mittels einer Betätigungseinrichtung. Durch die Kopplung kann nämlich eine automatische Aktivierung des optischen Signalisierungssystems zur Erzeugung von Aufmerksamkeit im Außenraum des Fahrzeugs erfolgen. Da der Fahrzeugführer sich nicht um das Aktivieren zweier unabhängiger Systeme kümmern braucht, ermöglicht dies zudem einen entscheidenden Geschwindigkeitsvorteil zur Erhöhung der Sicherheit.

Die Kopplung des akustischen Signalisierungssystems und des optischen Signalisierungssystems kann dabei beispielsweise hardwaretechnisch und/oder softwaretechnisch realisiert sein. Ebenfalls kann die Kopplung des akustischen Signalisierungssystems und des optischen Signalisierungssystems mittelbar oder unmittelbar erfolgen. So können die Systeme beispielsweise direkt miteinander gekoppelt sein oder über eine weitere Einheit oder ein weiteres System.

Das Warnsystem kann somit insbesondere als Warnsystem zur Erzeugung von Aufmerksamkeit im Außenraum des Fahrzeugs angesehen werden. Ebenfalls kann das Verfahren insbesondere als Verfahren zur Erzeugung von Aufmerksamkeit im Außenraum des Fahrzeugs angesehen werden. Das Warnsystem nach dem ersten Aspekt kann dabei insbesondere ein Verfahren nach dem zweiten Aspekt durchführen bzw. ein Verfahren nach dem zweiten Aspekt kann insbesondere durch ein Warnsystem gemäß dem ersten Aspekt durchgeführt werden.

Um eine möglichst hohe Aufmerksamkeit im Außenbereich des Fahrzeugs zu erzeugen, ist gemäß einer bevorzugten Ausgestaltung der Aspekte der Erfindung das Warnsystem derart eingerichtet, dass das optische Signalisierungssystem zur Erzeugung von Aufmerksamkeit im Außenbereich des Fahrzeugs zumindest zeitweise gleichzeitig mit dem akustischen Signalisierungssystem zur Erzeugung von Aufmerksamkeit im Außenbereich des Fahrzeugs aktiviert ist. Bei dem Warnsystem können also das akustische Signalisierungssystem und das optische Signalisierungssystem derart gekoppelt sein, dass das optische Signalisierungssystem und das akustische Signalisierungssystem zumindest zeitweise gleichzeitig zur Erzeugung von Aufmerksamkeit im Außenbereich aktiviert sind. Vorzugsweise sind das akustische Signalisierungssystem und das optische Signalisierungssystem derart gekoppelt, dass das optische Signalisierungssystem und das akustische Signalisierungssystem gleichzeitig zur Erzeugung von Aufmerksamkeit im Außenbereich aktiviert sind.

Erfindungsgemäß ist das optische Signalisierungssystem zur Erzeugung von Aufmerksamkeit im Außenbereich des Fahrzeugs mittels eines Blinksignals eingerichtet. Das heißt, dass das optische Signalisierungssystem durch das Aktivieren zur Erzeugung von Aufmerksamkeit im Außenbereich des Fahrzeugs ein Blinksignal erzeugt. Das optische Signalisierungssystem ist dann insbesondere derart eingestellt, dass die zumindest eine Lichtquelle abwechselnd leuchtet und nicht leuchtet. Das Blinksignal weist eine (konstante oder variable) Blinkfrequenz auf, mit der das Blinksignal blinkt. Dabei kann die Blinkfrequenz des Blinksignals abhängig von der zumindest einen Lichtquelle des optischen Signalisierungssystems sein, da beispielsweise mit einer Glühlampe nur eine geringere Blinkfrequenz möglich ist als mit einer LED-basierten Lichtquelle. Beispielsweise wird die Blinkfrequenz in Abhängigkeit der vorhandenen zumindest einen Lichtquelle bestimmt.

Beispielsweise beträgt die (insbesondere minimale oder mittlere) Blinkfrequenz des Blinksignals zumindest zeitweise mindestens 1 Hz, vorzugsweise mindestens 5 Hz, weiter bevorzugt mindestens 10 Hz. Als besonders vorteilhaft zur Erzeugung von Aufmerksamkeit hat sich herausgestallt, wenn das Blinksignal ein blitzlichtartiges oder stroboskopartiges Blinksignal ist. Hierzu erzeugt das Blinksignal beispielsweise Lichtblitze mit einer (insbesondere maximalen oder mittleren) Leuchtdauer von höchstens 100 ms, vorzugsweise weniger als 50 ms, besonders bevorzugt weniger als 1 ms.

Als weiterhin besonders bevorzugt hat sich es herausgestellt, wenn gemäß einer bevorzugten Ausgestaltung der Aspekte der Erfindung das Warnsystem derart eingerichtet ist, dass das Blinksignal zumindest zeitweise ungleichmäßig blinkt. Hierunter wird verstanden, dass sich insbesondere die Blinkfrequenz und/oder die Leuchtdauer der Lichtblitze des Blinksignals mit der Zeit ändern. So weist beispielsweise das Blinksignal zumindest zeitweise eine ungleichmäßige Blinkfrequenz auf. Alternativ oder zusätzlich weist das Blinksignal eine zumindest zeitweise ungleichmäßige Leuchtdauer der Lichtblitze auf. Es hat sich gezeigt, dass hierdurch die Aufmerksamkeit von Verkehrsteilnehmern im Außenbereich des Fahrzeugs besonders schnell erlangt und deren Warnung erreicht werden kann. Gemäß einer bevorzugten Ausgestaltung ist das Warnsystem derart eingerichtet ist, dass das Blinksignal zumindest zeitweise zufällig oder pseudozufällig blinkt. Hierunter wird verstanden, dass insbesondere die Blinkfrequenz und/oder die Leuchtdauer des Blinksignals sich mit der Zeit (pseudo-)zufällig ändern. Es hat sich gezeigt, dass dies aufgrund eines unvorhersehbaren Blinksignals zu einem besonders aufmerksamkeitserzeugenden Blinksignal führt.

Erfindungsgemäß ist das Warnsystem derart eingerichtet, dass sich eine Eigenschaft des Blinksignals (beispielsweise die Blinkfrequenz, die Leuchtdauer der Lichtblitze, die Intensität und/oder die Lichtfarbe) in Abhängigkeit der Aktivierungsdauer des Blinksignals, ändert. Beispielsweise ändert sich eine Eigenschaft des Blinksignals momentan und/oder im Mittel (beispielsweise gemittelt über mehrere Lichtblitze). Dabei hat es sich insbesondere als vorteilhaft erwiesen, wenn sich eine oder mehrere Eigenschaft des Blinksignals, insbesondere die Blinkfrequenz und/oder die Leuchtdauer der Lichtblitze, in Abhängigkeit einer Aktivierungsdauer des Blinksignals (im Mittel) ändert. Besonders bevorzugt nimmt die Blinkfrequenz (im Mittel) mit steigender Aktivierungsdauer des Blinksignals zu. Hierdurch wird die in der Regel steigende Dringlichkeit bei anhaltender Aktivierung des akustischen Signalisierungssystems mithilfe des optischen Signalisierungssystems an die Verkehrsteilnehmer vermittelt. Es kann also insbesondere erreicht werden, dass sich das Blinksignal mit anhaltender Aktivierungsdauer verdichtet oder hektischer wird. Gemäß einer bevorzugten Ausgestaltung der Aspekte der Erfindung ist das optische Signalsystem ein dediziertes optisches Signalsystem zur Erzeugung von Aufmerksamkeit. Unter einem dedizierten optischen Signalsystem wird insbesondere verstanden, dass das optische Signalsystem zur Erzeugung von Aufmerksamkeit oder Teile hiervon speziell für diesen Zweck vorgesehen wird. Dies ermöglicht es, das optische Signalsystem zur Erzeugung von Aufmerksamkeit in Hinblick auf den Einsatzzweck zu optimieren. So können beispielsweise ein oder mehrere Lichtquellen (wie beispielsweise großflächige LED-Paneele) flächige verwendet werden, welche speziell zu Erzeugung von Aufmerksamkeit optimiert sind.

Alternativ (oder auch zusätzlich) kann jedoch auch ein bereits im Fahrzeug vorhandenes optisches Signalisierungssystem verwendet werden, welches bereits einem anderen Zweck dient. So kann beispielsweise das optische Signalisierungssystem, welches ein Tagfahrlicht, ein Abblendlicht, ein Fernlicht, ein Markierungslicht, ein Begrenzungslicht und/oder ein Nebellicht bereitstellt, verwendet werden.

Gemäß einer bevorzugten Ausgestaltung der Aspekte der Erfindung umfasst die zumindest eine Lichtquelle des optischen Signalsystems zumindest eine Lichtquelle mit im Wesentlichen weißem Licht. Im Wesentlichen weißes Licht (welches unterschiedliche Farbtemperaturen oder auch Farbstiche aufweisen kann) eignet sich besonders gut, insbesondere in Kombination mit den hierin beschriebenen Ausgestaltungen, die die Aufmerksamkeit anderer Verkehrsteilnehmer auf das Fahrzeug zu lenken.

Gemäß einer bevorzugten Ausgestaltung der Aspekte der Erfindung umfasst die zumindest eine Lichtquelle des optischen Signalsystems zumindest ein flächiges Lichtpaneel. Durch die Verwendung von flächigen Lichtpaneelen, insbesondere (weißen) LED-Lichtpaneelen, kann die Aufmerksamkeit andere Verkehrsteilnehmer besonders sicher und schnell erreicht werden. Dies kann insbesondere darauf zurückgeführt werden, dass flächige Lichtpaneele sich von sonst im Verkehr verwendeten, eher punktförmigen Lichtquellen abheben.

Alternativ oder zusätzlich kann das optische Signalisierungssystem zur Erzeugung von Aufmerksamkeit auch andere Typen von Lichtquellen, beispielsweise im Wesentlichen punktförmige Lichtquellen oder Scheinwerfer.

Gemäß einer bevorzugten Ausgestaltung der Aspekte der Erfindung umfasst das Warnsystem weiterhin eine Aktivierungseinrichtung zumindest eingerichtet zum Aktivieren des akustischen Signalisierungssystems des Fahrzeugs. Die Aktivierungseinrichtung kann beispielsweise mechanische und/oder elektrische Komponenten umfassen. Die Aktivierungseinrichtung kann beispielsweise auch Teil des akustischen Signalisierungssystems sein. Die Kopplung des akustischen Signalisierungssystems und des optischen Signalisierungssystems kann dabei beispielsweise über die Aktivierungseinrichtung erfolgen, welche beispielsweise beide Systeme gleichzeitig ansteuert.

Gemäß einer bevorzugten Ausgestaltung der Aspekte der Erfindung umfasst die Aktivierungseinrichtung eine manuelle Betätigungseinheit und/oder ein Fahrassistenzsystem oder einen Teil hiervon. Ist eine manuelle Betätigungseinheit (beispielsweise ein Knopf oder ein Bodenpedal) als Aktivierungseinrichtung vorgesehen, kann der Führer des Fahrzeugs das akustische Signalisierungssystem wie gewohnt betätigen. Aufgrund der Kopplung des akustischen Signalisierungssystems und des optischen Signalisierungssystems wird dann zusätzlich das optische Signalisierungssystem zur Erzeugung von Aufmerksamkeit aktiviert. Ist die Aktivierungseinrichtung ein Fahrassistenzsystem oder ein Teil hiervon, kann ein Aktivieren des akustischen Signalisierungssystems und damit verbunden ein Aktivieren des optischen Signalisierungssystems zur Erzeugung von Aufmerksamkeit auch unabhängig vom Führer des Fahrzeugs erfolgen. Beispielsweise ist das Fahrassistenzsystem insbesondere dazu eingerichtet, andere Verkehrsteilnehmer im Bereich vor dem Fahrzeug automatisch zu erkennen, sodass das Fahrassistenzsystem bei Bedarf automatisch das akustische Signalisierungssystems und damit verbunden das optischen Signalisierungssystems zur Erzeugung von Aufmerksamkeit aktivieren kann. Hierzu kann das Fahrassistenzsystem beispielsweise ein entsprechendes Aktivierungssignal bereitstellen.

Gemäß einer bevorzugten Ausgestaltung der Aspekte der Erfindung sind das akustische Signalisierungssystem und das optische Signalisierungssystem derart gekoppelt, dass das optische Signalisierungssystem zur Erzeugung von Aufmerksamkeit deaktiviert wird, wenn das akustische Signalisierungssystem zur Erzeugung von Aufmerksamkeit deaktiviert wird. Auf diese Weise kann die Dauer der Aktivierung des optischen Signalisierungssystems vorteilhaft an die Dauer der Aktivierung des akustischen Signalisierungssystems angepasst werden. Durch das Deaktivieren des akustischen Signalisierungssystems zur Erzeugung von Aufmerksamkeit wird insbesondere die Erzeugung des entsprechenden akustischen Signals gestoppt oder unterbunden. Durch die Deaktivierung des optischen Signalisierungssystems zur Erzeugung von Aufmerksamkeit wird beispielsweise die zumindest eine Lichtquelle ausgeschaltet. Allerdings kann unter einem Deaktivieren des optischen Signalisierungssystems zur Erzeugung von Aufmerksamkeit ebenfalls verstanden werden, dass beispielsweise lediglich der Betriebsmodus des optischen Signalisierungssystems zur Erzeugung von Aufmerksamkeit verlassen wird, sodass beispielsweise von einem Blinksignal wieder auf den vor der Aktivierung bestehenden Modus (etwa ein dauerhaftes Leuchten der mindestens einen Lichtquelle des optischen Signalisierungssystems zur Verwendung als Tagefahrlicht oder dergleichen) gewechselt wird.

Gemäß einer bevorzugten Ausgestaltung der Aspekte der Erfindung ist das akustische Signalisierungssystem dazu eingerichtet, beim Aktivieren einen Warnton zu erzeugen. Der Warnton wird beispielsweise auf mechanische oder elektrische Weise erzeugt. Beispielswiese ist der Warnton ein nonverbaler Warnton, beispielsweise ein glockenartiger Ton oder ein Warnton konstanter oder variabler Frequenz.

Gemäß einer bevorzugten Ausgestaltung der Aspekte der Erfindung ist das Warnsystem zur Verwendung während der Fahrt und/oder während des Stillstands des Fahrzeugs eingerichtet. Das Warnsystem ist vorzugsweise während der Fahrt und/oder während des Stillstands des Fahrzeugs nicht gesperrt, sondern aktivierbar. Während der Fahrt kann das Warnsystem dafür sorgen, andere Verkehrsteilnehmer zu warnen und somit ein unnötiges Halten des Fahrzeuges zu verhindern. Während des Stillstandes kann das Warnsystem beispielsweise dafür sorgen, andere Verkehrsteilnehmer vor einem Anfahren zu warnen und somit ein unnötiges Warten verhindern.

Bezüglich weiterer vorteilhafter Ausgestaltungen der unterschiedlichen Aspekte wird auf die vorherige Beschreibung verwiesen. Insbesondere sollen durch die vorherige und folgende Beschreibung von Verfahrensschritten gemäß bevorzugter Ausführungsformen des Verfahrens auch entsprechende Mittel zur Durchführung der Verfahrensschritte durch bevorzugte Ausführungsformen des Warnsystems offenbart sein. Ebenfalls soll durch die Offenbarung von Mitteln zur Durchführung eines Verfahrensschrittes durch das Warnsystem der entsprechende Verfahrensschritt offenbart sein.

Im Weiteren soll die Erfindung anhand eines Ausführungsbeispiels in Verbindung mit den Zeichnungen näher erläutert werden. Die Zeichnungen zeigen in
- Fig. 1: ein beispielhaftes Schienenfahrzeug mit einem beispielhaften Warnsystem gemäß der Erfindung zur Durchführung eines beispielhaften Verfahrens gemäß der Erfindung;
- Fig. 2a,b: schematische Blockdiagramme beispielhafter Warnsysteme gemäß der Erfindung; und
- Fig. 3a-c: schematische Diagramme zur Darstellung beispielhafter optischer und akustischer Signale, wobei Fig. 3b nicht teil der Erfindung ist.

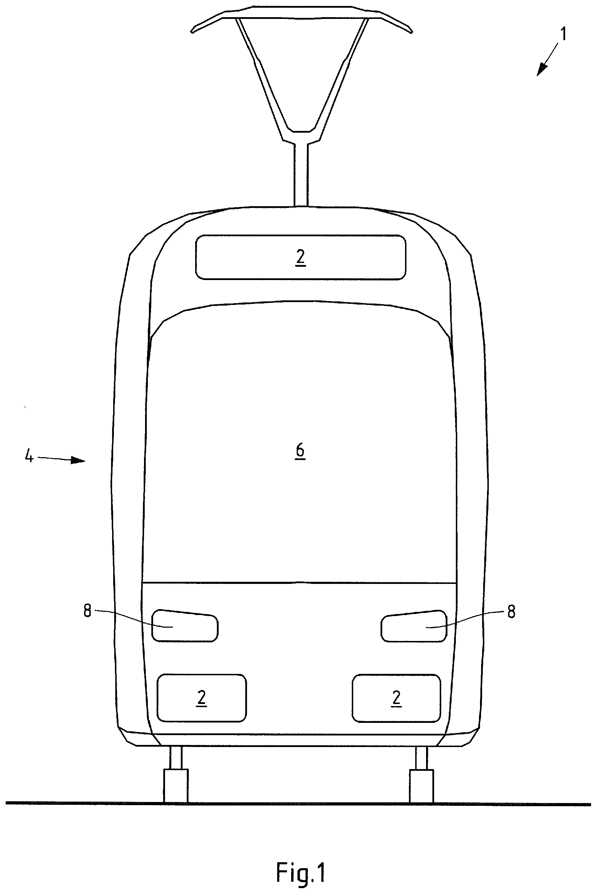

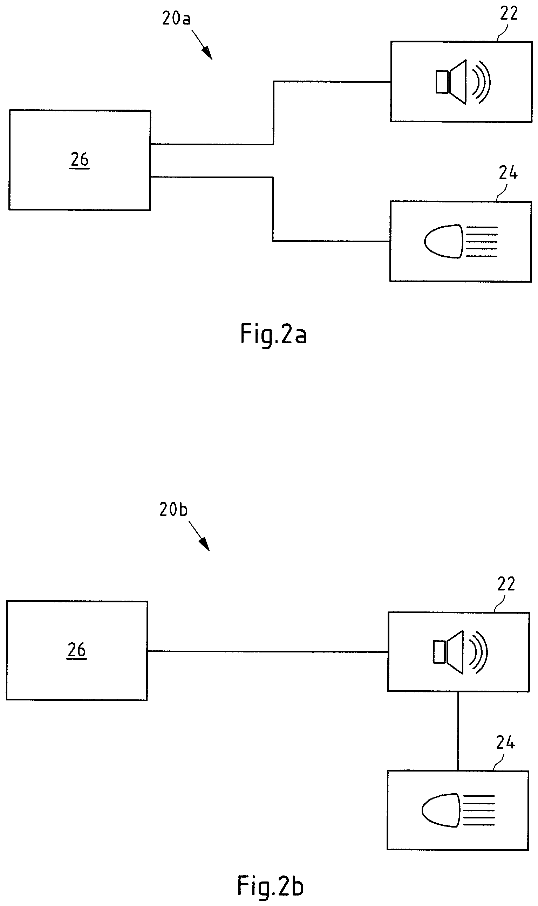

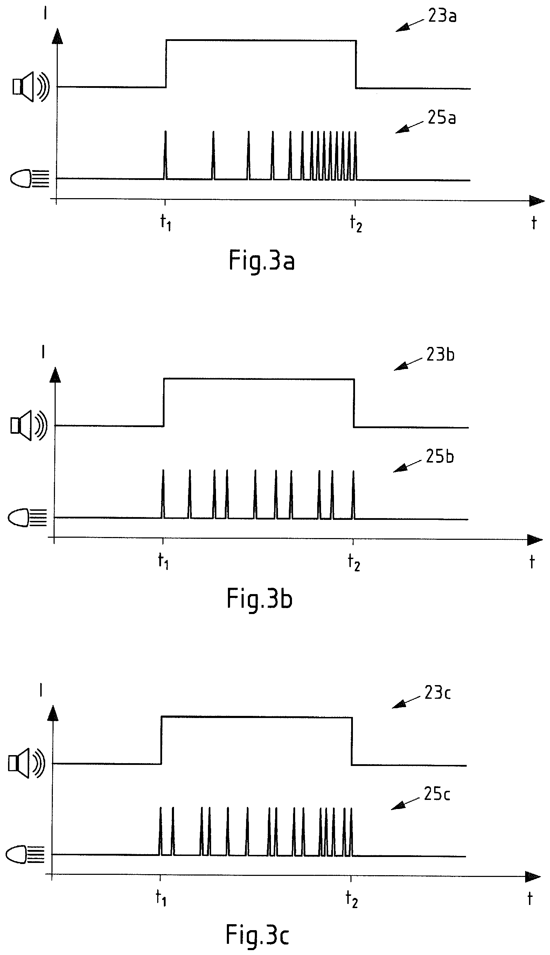

Fig. 1 zeigt zunächst als Fahrzeug beispielhaft ein Schienenfahrzeug 1, welches ein beispielhaftes Warnsystem 20a, 20b (vgl. Fig. 2) gemäß der Erfindung zur Durchführung eines beispielhaften Verfahrens gemäß der Erfindung aufweist. Das Warnsystem des Schienenfahrzeugs 1 kann dabei sowohl während der Fahrt als auch während des Stillstands des Schienenfahrzeugs 1 verwendet werden. Das Warnsystem wird im weiteren Detail in Zusammenhang mit den Fig. 2 und 3 beschrieben.

Das hier beispielhaft dargestellte Schienenfahrzeug 1 ist eine Straßenbahn, welche ein akustisches Signalisierungssystem (vgl. Fig. 2) zur Erzeugung von Aufmerksamkeit im Außenbereich des Schienenfahrzeugs 1 aufweist, beispielsweise in Form einer mechanischen Glocke, eines Signalhorns oder eines elektrischen System mit einem Lautsprecher. Das akustische Signalisierungssystem ist somit eingerichtet, beim Aktivieren einen Warnton zu erzeugen.

Zudem weist das Schienenfahrzeug 1 ein optisches Signalisierungssystem (vgl. Fig. 2) zur Erzeugung von Aufmerksamkeit im Außenbereich des Schienenfahrzeugs 1 mit Lichtquellen 2 im Frontbereich 4 des Schienenfahrzeugs 1 auf. Das optische Signalisierungssystem zur Erzeugung von Aufmerksamkeit umfasst in diesem Fall flächige LED-Lichtpaneele 2 im unteren und oberen Bereich an der Frontseite 6 des Schienenfahrzeugs 1. Die Lichtpaneele 2 erzeugen in diesem Fall weißes Licht. Das optische Signalisierungssystem ist in diesem Fall ein dediziertes System.

Das Schienenfahrzeug umfasst zudem weitere Lichtquellen 8, welche beispielsweise als Abblendlicht vorgesehen sein können und somit einem weiteren Zweck dienen. Auch diese Lichtquellen 8 können zusätzlich oder alternativ ein (nicht dediziertes) optisches Signalisierungssystem (oder ein Teil hiervon) zur Erzeugung von Aufmerksamkeit im Außenbereich des Schienenfahrzeugs 1 sein.

Fig. 2a,b zeigen nun schematische Blockdiagramme beispielhafter Warnsysteme des Schienenfahrzeugs 1. Das in Fig. 2a gezeigte Warnsystem 20a und das in Fig. 2b gezeigte Warnsystem 20b weisen jeweils ein akustisches Signalisierungssystem 22 zur Erzeugung von Aufmerksamkeit im Außenbereich des Schienenfahrzeugs 1 und ein optisches Signalisierungssystem 24 mit Lichtquellen 2 im Frontbereich 4 des Schienenfahrzeugs 1 zur Erzeugung von Aufmerksamkeit im Außenbereich des Schienenfahrzeugs 1 auf. Weiterhin weisen die Warnsysteme 20a, 20b jeweils eine Aktivierungseinrichtung 26 eingerichtet jedenfalls zum Aktivieren des akustischen Signalisierungssystems 22 des Schienenfahrzeugs 1 auf. Die Aktivierungseinrichtung 26 kann beispielsweise eine manuelle Betätigungseinheit (beispielsweise einen Druckknopf oder ein Bodenpedal) sein oder umfassen. Die Aktivierungseinrichtung 26 kann jedoch ebenfalls ein Fahrassistenzsystem oder ein Teil hiervon sein oder umfassen.

Dabei sind das akustische Signalisierungssystem 22 und das optische Signalisierungssystem 24 derart gekoppelt, dass das optische Signalisierungssystem 24 zur Erzeugung von Aufmerksamkeit im Außenbereich des Schienenfahrzeugs 1 aktiviert wird, wenn ein Aktivieren des akustischen Signalisierungssystems 22 zur Erzeugung von Aufmerksamkeit im Außenbereich des Schienenfahrzeugs 1 erfolgt. Im Falle von Warnsystem 20a sind das akustische Signalisierungssystem 22 und das optische Signalisierungssystem 24 mittelbar über die Aktivierungseinrichtung 26 gekoppelt. Im Falle von Warnsystem 20b sind das akustische Signalisierungssystem 22 und das optische Signalisierungssystem 24 unmittelbar gekoppelt. In jedem Fall wird erreicht, dass das optische Signalisierungssystem 24 zur Erzeugung von Aufmerksamkeit im Außenbereich des Schienenfahrzeugs 1 aktiviert wird, wenn ein Aktivieren des akustischen Signalisierungssystems 22 zur Erzeugung von Aufmerksamkeit im Außenbereich des Schienenfahrzeugs 1 erfolgt.

Fig. 3a und 3c zeigen nun schematische Diagramme zur Darstellung beispielhafter optischer und akustischer Signale, welche mit Ausführungsbeispielen erfindungsgemäßer Warnsysteme und Verfahren erzeugt werden. In den Diagrammen ist jeweils ein durch das akustische Signalisierungssystem 22 erzeugtes akustisches Signal 23a, 23b, 23c und ein durch das optische Signalisierungssystem 24 erzeugtes optisches Signal 25a, 25b, 25c zur Erzeugung von Aufmerksamkeit über der Zeit t aufgetragen. Das optische Signal 25a, 25b, 25c ist jeweils als Blinksignal ausgebildet. Sowohl das akustische Signal 23a, 23b, 23c als auch das optische Signal 25a, 25b, 25c beginnen jeweils zum Zeitpunkt t₁ und enden zum Zeitpunkt t₂. Das heißt, das optische Signalisierungssystem 24 zur Erzeugung von Aufmerksamkeit im Außenbereich des Schienenfahrzeugs 1 wird jeweils vollständig gleichzeitig mit dem akustischen Signalisierungssystem 22 zur Erzeugung von Aufmerksamkeit im Außenbereich des Schienenfahrzeugs 1 aktiviert. Das heißt zudem, dass das optische Signalisierungssystem 24 zur Erzeugung von Aufmerksamkeit deaktiviert wird, wenn das akustische Signalisierungssystem 22 zur Erzeugung von Aufmerksamkeit deaktiviert wird.

In jedem der drei dargestellten Fälle ist das Warnsystem derart eingerichtet, dass das Blinksignal 25a, 25b, 25c ungleichmäßig blinkt.

Im Falle des erfindungsgemäßen Blinksignals 25a erhöht sich die Blinkfrequenz mit der Zeit. Dabei erhöht sich die (momentane und mittlere) Blinkfrequenz kontinuierlich mit der Aktivierungsdauer. Das heißt, dass sich die Blinkfrequenz als eine Eigenschaft des Blinksignals 25a in Abhängigkeit der Aktivierungsdauer ändert. Das Blinksignal 25a wird also zunehmend hektischer.

Im Falle des Blinksignals 25b, das nicht Teil der Erfindung ist, blinkt das Blinksignal 25b ebenfalls ungleichmäßig, in diesem Fall zufällig oder pseudozufällig, da sich die Blinkfrequenz (pseudeo-)zufällig ändert. Zwar ändert sich dadurch die momentane Blinkfrequenz des Blinksignals 25b, die mittlere Blinkfrequenz ändert sich dabei aber vorzugsweise nicht.

Auch im Falle des erfindungsgemäßen Blinksignals 25c blinkt das Blinksignal 25b zufällig oder pseudozufällig und damit ungleichmäßig, da sich die Blinkfrequenz (pseudeo-)zufällig ändert. In diesem Fall ändert sich zudem die mittlere Blinkfrequenz des Blinksignals 25c, da sich die mittlere Blinkfrequenz als eine Eigenschaft des Blinksignals 25c in Abhängigkeit der Aktivierungsdauer erhöht. Das Blinksignal 25c wird also zunehmend hektischer.

## Patentansprüche

1. Warnsystem eines Fahrzeugs, wobei das Fahrzeug ein Schienenfahrzeug ist, umfassend:
- ein akustisches Signalisierungssystem (22) zur Erzeugung von Aufmerksamkeit im Außenbereich des Fahrzeugs (1), und
- ein optisches Signalisierungssystem (24) mit zumindest einer Lichtquelle (2, 8), die im Frontbereich (4) des Fahrzeugs (1) anordenbar ist, zur Erzeugung von Aufmerksamkeit im Außenbereich des Fahrzeugs (1), wobei das optische Signalisierungssystem (24) zur Erzeugung von Aufmerksamkeit im Außenbereich des Fahrzeugs (1) mittels eines Blinksignals (25a, 25b, 25c) eingerichtet ist,
wobei das akustische Signalisierungssystem (22) und das optische Signalisierungssystem (24) derart gekoppelt sind, dass das optische Signalisierungssystem (24) zur Erzeugung von Aufmerksamkeit im Außenbereich des Fahrzeugs (1) aktiviert wird, wenn ein Aktivieren des akustischen Signalisierungssystems (22) zur Erzeugung von Aufmerksamkeit im Außenbereich des Fahrzeugs (1) erfolgt,
**dadurch gekennzeichnet,**
**dass** das Warnsystem (20a, 20b) derart eingerichtet ist, dass sich eine Eigenschaft des Blinksignals (25a, 25b, 25c) in Abhängigkeit einer Aktivierungsdauer des Blinksignals (25a, 25b, 25c) ändert.

2. Warnsystem nach Anspruch 1, **dadurch gekennzeichnet, dass** Warnsystem derart eingerichtet ist, dass das optische Signalisierungssystem (24) zur Erzeugung von Aufmerksamkeit im Außenbereich des Fahrzeugs (1) zumindest zeitweise gleichzeitig mit dem akustischen Signalisierungssystem (22) zur Erzeugung von Aufmerksamkeit im Außenbereich des Fahrzeugs (1) aktiviert ist.

3. Warnsystem nach Anspruch 1 oder 2, **dadurch gekennzeichnet, dass** das Warnsystem derart eingerichtet ist, dass das Blinksignal zumindest zeitweise ungleichmäßig blinkt.

4. Warnsystem nach einem der Ansprüche 1 bis 3, **dadurch gekennzeichnet, dass** das optische Signalsystem (24) ein dediziertes optisches Signalsystem zur Erzeugung von Aufmerksamkeit ist.

5. Warnsystem nach einem der Ansprüche 1 bis 4, **dadurch gekennzeichnet, dass** die zumindest eine Lichtquelle (2, 8) des optischen Signalsystems (24) zumindest eine Lichtquelle (2, 8) mit weißem Licht umfasst.

6. Warnsystem nach einem der Ansprüche 1 bis 5, **dadurch gekennzeichnet, dass** die zumindest eine Lichtquelle (2, 8) des optischen Signalsystems zumindest ein flächiges Lichtpaneel (2) umfasst.

7. Warnsystem nach einem der Ansprüche 1 bis 6, weiterhin umfassend:
- eine Aktivierungseinrichtung (26) zumindest eingerichtet zum Aktivieren des akustischen Signalisierungssystems (22) des Fahrzeugs (1).

8. Warnsystem nach Anspruch 7, **dadurch gekennzeichnet, dass** die Aktivierungseinrichtung (26) eine manuelle Betätigungseinheit und/oder ein Fahrassistenzsystem oder einen Teil hiervon umfasst.

9. Warnsystem nach einem der Ansprüche 1 bis 8, wobei das akustische Signalisierungssystem (22) und das optische Signalisierungssystem (24) derart gekoppelt sind, dass das optische Signalisierungssystem (24) zur Erzeugung von Aufmerksamkeit deaktiviert wird, wenn das akustische Signalisierungssystem (22) zur Erzeugung von Aufmerksamkeit deaktiviert wird.

10. Warnsystem nach einem der Ansprüche 1 bis 8, **dadurch gekennzeichnet, dass** das akustische Signalisierungssystem (22) dazu eingerichtet ist, beim Aktivieren einen Warnton zu erzeugen.

11. Warnsystem nach einem der Ansprüche 1 bis 10, **dadurch gekennzeichnet, dass** das Warnsystem (20a, 20b) zur Verwendung während der Fahrt und/oder während des Stillstands des Fahrzeugs (1) eingerichtet ist.

12. Verfahren, durchgeführt von einem Fahrzeug, wobei das Fahrzeug ein Schienenfahrzeug ist, oder einem Teil hiervon, insbesondere einem Warnsystem nach einem der Ansprüche 1 bis 11, das Verfahren umfassend:
- Aktivieren eines akustischen Signalisierungssystems (22) des Fahrzeugs (1) zur Erzeugung von Aufmerksamkeit im Außenbereich des Fahrzeugs (1); und
- Aktivieren eines optischen Signalisierungssystems (24) mit zumindest einer Lichtquelle (2, 8) im Frontbereich des Fahrzeugs (1) zur Erzeugung von Aufmerksamkeit im Außenbereich des Fahrzeugs (1) mittels eines Blinksignals (25a, 25b, 25c), wenn das Aktivieren des akustischen Signalisierungssystems (22) des Fahrzeugs (1) erfolgt, wobei sich eine Eigenschaft des Blinksignals (25a, 25b, 25c) in Abhängigkeit der Aktivierungsdauer des Blinksignals (25a, 25b, 25c) ändert.

13. Verwendung eines Warnsystems (20a, 20b) nach einem der Ansprüche 1 bis 11 in einem Schienenfahrzeug (1) zur Erzeugung von Aufmerksamkeit im Außenbereich des Schienenfahrzeugs (1).

## Claims

1. Warning system of a vehicle, wherein the vehicle is a rail vehicle, comprising:
- an acoustic signalling system (22) for generating attention in the external area of the vehicle (1), and
- an optical signalling system (24) with at least one light source (2, 8) to be arranged in the front region (4) of the vehicle (1) for generating attention in the outer region of the vehicle (1), wherein the optical signalling system (24) is arranged to generate attention in the outer region of the vehicle (1) by means of a flashing signal (25a, 25b, 25c),
wherein the acoustic signalling system (22) and the optical signalling system (24) are coupled in such a way that the optical signalling system (24) is activated to generate attention in the external area of the vehicle (1) when the acoustic signalling system (22) is activated to generate attention in the external area of the vehicle (1),
**characterized in that**
the warning system (20a, 20b) is configured such that a property of the flashing signal (25a, 25b, 25c) changes as a function of an duration of activation of the flashing signal (25a, 25b, 25c).

2. Warning system according to claim 1, **characterized in that** the warning system is set up in such a way that the optical signalling system (24) for generating attention in the outer area of the vehicle (1) is activated at least temporarily simultaneously with the acoustic signalling system (22) for generating attention in the outer area of the vehicle (1).

3. Warning system according to claim 1 or 2, **characterised in that** the warning system is set up in such a way that the flashing signal flashes unevenly at least temporarily.

4. Warning system according to any one of claims 1 to 3, **characterized in that** the optical signal system (24) is a dedicated optical signal system for generating attention.

5. Warning system according to any one of claims 1 to 4, **characterized in that** the at least one light source (2, 8) of the optical signalling system (24) comprises at least one light source (2, 8) with white light.

6. Warning system according to any one of claims 1 to 5, **characterised in that** the at least one light source (2, 8) of the optical signalling system comprises at least one flat light panel (2).

7. Warning system according to any one of claims 1 to 6, further comprehensive:
- an activation device (26) at least arranged for activating the acoustic signalling system (22) of the vehicle (1).

8. Warning system according to claim 7, **characterized in that** the activation device (26) comprises a manual actuation unit and/or a driver assistance system or part thereof.

9. Warning system according to any one of claims 1 to 8, wherein the acoustic signaling system (22) and the optical signaling system (24) are coupled such that the optical signaling system (24) is deactivated to generate attention when the acoustic signaling system (22) is deactivated to generate attention.

10. Warning system according to any one of claims 1 to 8, **characterised in that** the acoustic signalling system (22) is arranged to produce a warning sound when activated.

11. Warning system according to any one of claims 1 to 10, **characterised in that** the warning system (20a, 20b) is adapted for use while the vehicle (1) is in motion and/or stationary.

12. Method carried out by a vehicle, the vehicle being a rail vehicle, or a part thereof, in particular a warning system according to one of claims 1 to 11, the method comprising:
- activating an acoustic signalling system (22) of the vehicle (1) to generate attention in the exterior of the vehicle (1); and
- activating of an optical signalling system (24) having at least one light source (2, 8) in the front region of the vehicle (1) for generating attention in the outer region of the vehicle (1) by means of a flashing signal (25a, 25b, 25c) when the activation of the acoustic signalling system (22) of the vehicle (1) takes place, wherein a property of the flashing signal (25a, 25b, 25c) changes as a function of the duration of activation of the flashing signal (25a, 25b, 25c).

13. Use of a warning system (20a, 20b) according to any one of claims 1 to 11 in a railway vehicle (1) for generating attention in the outer area of the railway vehicle (1).

## Revendications

1. Système d'avertissement d'un véhicule, le véhicule étant un véhicule sur rails, comprenant :
- un système de signalisation acoustique (22) destiné à susciter la vigilance dans la zone extérieure au véhicule (1), et
- un système de signalisation optique (24) comprenant au moins une source lumineuse (2, 8), qui peut être disposée dans la zone avant (4) du véhicule (1), destiné à susciter la vigilance dans la zone extérieure au véhicule (1), le système de signalisation optique (24) destiné à susciter la vigilance dans la zone extérieure au véhicule (1) étant réalisé au moyen d'un signal intermittent (25a, 25b, 25c),
le système de signalisation acoustique (22) et le système de signalisation optique (24) étant couplés de sorte que le système de signalisation optique (24) destiné à susciter la vigilance dans la zone extérieure au véhicule (1) est activé lorsqu'une activation du système de signalisation acoustique (22) destiné à susciter la vigilance dans la zone extérieure au véhicule (1) a lieu,
**caractérisé**
**en ce que** le système d'avertissement (20a, 20b) est conçu de sorte qu'une propriété du signal intermittent (25a, 25b, 25c) se modifie en fonction d'une durée d'activation du signal intermittent (25a, 25b, 25c).

2. Système d'avertissement selon la revendication 1, **caractérisé en ce que** le système d'avertissement est conçu de sorte que le système de signalisation optique (24) destiné à susciter la vigilance dans la zone extérieure au véhicule (1) est activé, au moins temporairement, simultanément au système de signalisation acoustique (22) destiné à susciter la vigilance dans la zone extérieure au véhicule (1).

3. Système d'avertissement selon la revendication 1 ou 2, **caractérisé en ce que** le système d'avertissement est conçu de sorte que le signal intermittent clignote, au moins temporairement, de manière irrégulière.

4. Système d'avertissement selon l'une des revendications 1 à 3, **caractérisé en ce que** le système de signalisation optique (24) est un système de signal optique dédié destiné à susciter la vigilance.

5. Système d'avertissement selon l'une des revendications 1 à 4, **caractérisé en ce que** l'au moins une source lumineuse (2, 8) du système de signal optique (24) comprend au moins une source lumineuse (2, 8) à lumière blanche.

6. Système d'avertissement selon l'une des revendications 1 à 5, **caractérisé en ce que** l'au moins une source lumineuse (2, 8) du système de signal optique comprend au moins un panneau lumineux (2) plan.

7. Système d'avertissement selon l'une des revendications 1 à 6, comprenant en outre :
- un dispositif d'activation (26) au moins conçu pour l'activation du système de signalisation acoustique (22) du véhicule (1).

8. Système d'avertissement selon la revendication 7, **caractérisé en ce que** le dispositif d'activation (26) comprend une unité d'actionnement manuel et/ou un système d'assistance à la conduite ou une partie de celui-ci.

9. Système d'avertissement selon l'une des revendications 1 à 8, le système de signalisation acoustique (22) et le système de signalisation optique (24) étant couplés de sorte que le système de signalisation optique (24) destiné à susciter la vigilance est désactivé lorsque le système de signalisation acoustique (22) destiné à susciter la vigilance est désactivé.

10. Système d'avertissement selon l'une des revendications 1 à 8, **caractérisé en ce que** le système de signalisation acoustique (22) est conçu pour produire un son d'avertissement lors de son activation.

11. Système d'avertissement selon l'une des revendications 1 à 10, **caractérisé en ce que** le système d'avertissement (20a, 20b) est conçu pour être utilisé pendant le trajet et/ou pendant l'arrêt du véhicule (1).

12. Procédé, exécuté par un véhicule, le véhicule étant un véhicule sur rails, ou par une partie dudit véhicule, notamment par un système d'avertissement selon l'une des revendications 1 à 11, le procédé comprenant :
- activation d'un système de signalisation acoustique (22) du véhicule (1) destiné à susciter la vigilance dans la zone extérieure au véhicule (1) ; et
- activation d'un système de signalisation optique (24) comprenant au moins une source lumineuse (2, 8) dans la zone avant du véhicule (1), destiné à susciter la vigilance dans la zone extérieure au véhicule (1) au moyen d'un signal intermittent (25a, 25b, 25c) lorsque l'activation du système de signalisation acoustique (22) du véhicule (1) a lieu, une propriété du signal intermittent (25a, 25b, 25c) se modifiant en fonction de la durée d'activation du signal intermittent (25a, 25b, 25c).

13. Utilisation d'un système de signalement (20a, 20b) selon l'une des revendications 1 à 11 dans un véhicule sur rails (1) pour susciter la vigilance dans la zone extérieure au véhicule sur rails (1).
